# EUROPÄISCHE PATENTSCHRIFT

(11) **EP 3 921 810 B1**
(45) Veröffentlichungstag und Bekanntmachung des Hinweises auf die Patenterteilung: **01.10.2025**
(21) Anmeldenummer: 20703985.0
(22) Anmeldetag: 05.02.2020
(51) Int. Cl.: G07C 3/14

(54) **VERFAHREN UND VORRICHTUNG ZUM AUTOMATISIERTEN IDENTIFIZIEREN EINES PRODUKTFEHLERS EINES PRODUKTS UND/ODER ZUM AUTOMATISIERTEN IDENTIFIZIEREN EINER PRODUKTFEHLERURSACHE DES PRODUKTFEHLERS**
METHOD AND DEVICE FOR AUTOMATICALLY IDENTIFYING A PRODUCT ERROR IN A PRODUCT AND/OR FOR AUTOMATICALLY IDENTIFYING A PRODUCT ERROR CAUSE OF THE PRODUCT ERROR
PROCÉDÉ ET DISPOSITIF D'IDENTIFICATION AUTOMATISÉE D'UN DÉFAUT D'UN PRODUIT ET/OU D'IDENTIFICATION AUTOMATISÉE D'UNE CAUSE DU DÉFAUT DU PRODUIT

(30) Priorität: 07.02.2019 DE 102019201557
(43) Veröffentlichungstag der Anmeldung: 15.12.2021
(73) Patentinhaber: ZF Friedrichshafen AG, 88046 Friedrichshafen (DE)
(72) Erfinder: ZEREY, Mazlum, 66113 Saarbrücken (DE); KIRST, Christoph, 66787 Wadgassen (DE); NOMINE, Emile, 57720 Epping (FR); THOMAS, Kevin, 66459 Kirkel (DE); CHANG, Minjia, 88677 Markdorf (DE); JOCHEM, Stefan, 66333 Voelklingen (DE)
(86) Internationale Anmeldenummer: PCT/EP2020/052786
(87) Internationale Veröffentlichungsnummer: WO 2020/161149

(56) Entgegenhaltungen:
- CN-A- 104 361 352
- US-A1- 2004 138 846
- US-A1- 2004 186 637
- US-A1- 2004 188 609
- US-A1- 2008 147 586
- SAND CHRISTIAN ET AL: "Holistic production analysis for actuator manufacturing using data mining", 2016 6TH INTERNATIONAL ELECTRIC DRIVES PRODUCTION CONFERENCE (EDPC), IEEE, 30 November 2016 (2016-11-30), pages 301 - 305, XP033065363, ISBN: 978-1-5090-2908-2, [retrieved on 20170210], DOI: 10.1109/EDPC.2016.7851346

## Beschreibung

Die vorliegende Erfindung betrifft ein Verfahren zum automatisierten Identifizieren eines Produktfehlers eines Produkts und/oder zum automatisierten Identifizieren einer Produktfehlerursache des Produktfehlers gemäß dem Oberbegriff von Anspruch 1 sowie eine Vorrichtung zum automatisierten Identifizieren eines Produktfehlers eines Produkts und/oder zum automatisierten Identifizieren einer Produktfehlerursache des Produktfehlers gemäß dem Oberbegriff von Anspruch 13.

Im Stand der Technik ist es bekannt, einerseits bereits während der Herstellung von komplexen Produkten sowie andererseits auch nach der Fertigstellung der komplexen Produkte eine Vielzahl von unterschiedlichen Messdaten über den Zustand der Produkte zu erfassen und statistisch aufzubereiten. Die solcherart aufbereiteten Daten werden dann mit Soll-Werten verglichen, um fehlerhafte Produkte zu identifizieren. Die fehlerhaften Produkte können im Folgenden einer Fehleranalyse unterworfen werden, um den konkreten Produktfehler sowie möglichst auch die dem Produktfehler zugrunde liegende Produktfehlerursache zu identifizieren. Anhand des identifizierten Produktfehlers kann dann ggf. eine geeignete Reparaturmaßnahme für das Produkt eingeleitet werden. Sofern es gelingt, auch die Produktfehlerursache zu identifizieren, kann zusätzlich versucht werden, den Herstellungsprozess zu verbessern bzw. möglichst fehlerfrei zu gestalten.

Aus der DE 43 05 522 A1 ist in diesem Zusammenhang eine Einrichtung zur rechnergestützten Diagnose eines aus unterschiedlichen Modulen bestehenden technischen Systems bekannt. Die Einrichtung umfasst in einem ersten Speicher Informationen über das technische System, über dessen Störungen und über dessen Diagnosemöglichkeiten. In einem zweiten Speicher ist die Konfiguration des technischen Systems abgespeichert. Ein dritter Speicher enthält ein Wissens-Modul für das technische System, wobei das Wissens-Modul aus den Informationen des ersten und des zweiten Speichers angepasst an das aus spezifischen Modulen hergestellte technische System erzeugt wird.

Die DE 195 07 134 C1 offenbart ein Verfahren zur automatischen Ableitung von prozess- und produkttechnischem Wissen aus einem integrierten Produkt- und Prozessmodell. Das Verfahren umfasst dabei das Modellieren einer Aufbau- und Funktionsstruktur von Produkten und Prozessen in einem integrierten Modell, welches den Zusammenhang zwischen dem Produkt und seinem Entstehungsprozess abbildet. Weiterhin umfasst das Verfahren das Modellieren von Fehlerwissen, das Modellieren von Strukturen zur Modularisierung der Wissensmodule sowie das Modellieren von Strukturen zum Verallgemeinern der Wissensmodule. Schließlich leitet das Verfahren auf Basis der Wissensmodule Wissen zu einem vorgegebenen Kontext ab.

Die US 2004/186637 A1 offenbart ein Verfahren zum Bestimmen von Korrekturwerten mittels eines Soll-Ist-Vergleichs des Verhaltens von Bauteilen oder Bauteilgruppen.Die Korrekturwerte geben an, wie einzelne Bauteile angesteuert werden müssen, um die gewünschte Reaktion zu zeigen. Beispielsweise kann es sich bei den Bauteilen um Magnetventile handeln, die mit Strom beaufschlagt werden, um eine bestimmte Ventilstellung einzunehmen.

Aus der US 2004/138846 A1 ist ein Testsystem für Halbleiterwafer bekannt, umfassend eine Testvorrichtung, welche einen Satz von Testdaten der Wafer erzeugt, und ein Diagnosesystem, welches die Testdaten automatisch analysiert, um ein Merkmal des Herstellungsprozesses zu identifizieren. Die Analyse kann dabei mehrere Sätze von Daten umfassen, einschließlich Rohdaten und gefilterter oder geglätteter Daten. Die Daten werden anhand einer Reihe von benutzerdefinierten Regeln, die als mathematische Ausdrücke, Formeln oder beliebige andere Kriterien definiert werden können, geeignet gefiltert. Die Daten werden dann analysiert, um Muster oder Unregelmäßigkeiten in den Daten zu identifizieren. Dadurch können beispielsweise Informationen zu Problemen in einem Herstellungs- bzw. Testprozess bereitgestellt werden. Ebenso kann für die Analyse nach Maßgabe eines Filters ein repräsentativer Satz von Merkmalen aus einem anderen Datensatz extrahiert werden. Dadurch verringert sich entsprechend auch die Dimensionalität des Analyseprozesses. Das Reduzieren der Anzahl von Merkmalen ermöglicht es, die Rechenkomplexität zu reduzieren.

Weitere relevante Dokumente bekannt aus dem Stand der Technik sind CN104361352A und SAND CHRISTIAN ET AL: "Holistic production analysis for actuator manufacturing using data mining",2016 6TH INTERNATIONAL ELECTRIC DRIVES PRODUCTION CONFERENCE (EDPC), IEEE, 30. November 2016 (2016-11-30), Seiten 301-305, XP033065363,DOI: 10.1109/EDPC.2016.7851346ISBN: 978-1-5090-2908-2.

Die bekannten Verfahren und Einrichtungen sind jedoch dahingehend nachteilbehaftet, als dass sie bei komplexen Produkten, wie z.B. bei Fahrzeuggetrieben, aufgrund ihrer Vielzahl von Teilen, der Vielzahl von Herstellungsschritten, welche teilweise durch unterschiedliche Zulieferer in unterschiedlicher Form ausgeführt werden und zu unterschiedlichen Zwischenprodukteigenschaften führen, sowie durch die Vielzahl von Montageschritten der Zwischenprodukte zum Gesamtprodukt, keine vollständig automatisierte Identifizierung von Produktfehlern und Fehlerursachen ermöglichen.

Es ist eine Aufgabe der Erfindung, ein verbessertes Verfahren zum automatisierten Identifizieren eines Produktfehlers eines Produkts und/oder zum automatisierten Identifizieren einer Produktfehlerursache des Produktfehlers vorzuschlagen.

Diese Aufgabe wird erfindungsgemäß durch das Verfahren zum automatisierten Identifizieren eines Produktfehlers eines Produkts und/oder zum automatisierten Identifizieren einer Produktfehlerursache des Produktfehlers gemäß Anspruch 1 gelöst. Vorteilhafte Ausgestaltungen und Weiterbildungen der Erfindung gehen aus den abhängigen Ansprüchen hervor.

Die Erfindung betrifft ein Verfahren zum automatisierten Identifizieren eines Produktfehlers eines Produkts und/oder zum automatisierten Identifizieren einer Produktfehlerursache des Produktfehlers, umfassend die Schritte
- Erzeugung des Produkts aus einer Vielzahl von Produktelementen durch eine Vielzahl von Fertigungsschritten und
- Erfassen einer Anzahl n von Prüfinformationen durch mindestens eine Produktprüfung, wobei die n Prüfinformationen einen n-dimensionalen Prüfwert bilden.

Das erfindungsgemäße Verfahren zeichnet sich aus durch die Schritte
- Durchführung einer Dimensionsreduzierung des n-dimensionalen Prüfwerts mittels mindestens eines Statistikprozesses zu einem dimensionsreduzierten Prüfwert,
- Vergleich des dimensionsreduzierten Prüfwerts mit einer Vielzahl von eingelernten Referenzwerten,
- Zuordnung des dimensionsreduzierten Prüfwerts zu mindestens einer Gruppe von untereinander ähnlichen Referenzwerten und
- automatisiertes Identifizieren des Produktfehlers und/oder der Produktfehlerursache anhand der Zuordnung.

Die Erfindung beschreibt somit ein Verfahren, das anhand von erfassten Prüfinformationen automatisiert ein Identifizieren eines Produktfehlers des Produkts bzw. einer Produktfehlerursache des Produktfehlers ermöglicht. Das Produkt selbst kann dabei auch vergleichsweise komplex aufgebaut sein und aus einer Vielzahl von einzelnen Produktelementen bestehen, die wiederum in einer Vielzahl von Fertigungsschritten zum fertigen Produkt zusammengefügt wurden. Beispielsweise kann es sich bei dem Produkt um ein Fahrzeuggetriebe handeln, das aus mehreren hundert einzelnen Produktelementen besteht, wobei die Produktelemente in einer Vielzahl von Fertigungsschritten an einer oder mehreren Fertigungsstationen bzw. Fertigungsanlagen zusammengefügt bzw. bearbeitet werden. Vorteilhaft werden sämtliche Prüfinformationen, die eine bestimmte Eigenschaft des Produkts beschreiben, als ein n-dimensionaler Prüfwert behandelt. D.h., dass für jede geprüfte Eigenschaft des Produkts ein eigener n-dimensionaler Prüfwert erzeugt wird. Alternativ bevorzugt werden sämtliche Prüfinformationen, die mehrere oder alle Eigenschaften des Produkts beschreiben, als ein einziger n-dimensionaler Prüfwert behandelt. Der n-dimensionale Prüfwert kann also sowohl nur eine spezifische Eigenschaft, beispielsweise ein akustisches Verhalten, beschreiben, als auch mehrere oder alle Eigenschaften des Produkts gleichermaßen beschreiben. Da der Wert n, der die Dimensionszahl bezeichnet, durch die Vielzahl der erfassten Prüfinformationen bei Werten von deutlich über 10⁶ liegen kann, wird weiterhin eine Dimensionsreduzierung durchgeführt. Gängige Statistikprozesse zur Dimensionsreduzierung sind im Stand der Technik bekannt, insbesondere aus dem Bereich der sog. beschreibenden Statistik. Ein im Rahmen der Erfindung bevorzugter Statistikprozess dieser Art ist das sog. t-verteilte "Stochastic Neighbor Embedding" (kurz: t-SNE), welches auch vergleichsweise komplexe Datenzusammenhänge berücksichtigt. Durch den Vergleich des dimensionsreduzierten Prüfwerts mit der Vielzahl der eingelernten Referenzwerte kann dann z.B. anhand von Ähnlichkeiten des Prüfwerts mit den Referenzwerten eine Zuordnung des Prüfwerts zu einer Gruppe von untereinander ebenfalls ähnlichen Referenzwerten erfolgen. Jede Gruppe von Referenzwerten entspricht dabei einem oder mehreren Produktfehlern bzw. Produktfehlerursachen. Eine weitere Gruppe entspricht einem fehlerfreien Produkt. Beispielsweise kann eine Gruppe von Referenzwerten dem "Produktfehler X, verursacht durch Produktfehlerursache Y" entsprechen. Die erfolgreiche Zuordnung des Prüfwerts zu einer solchen Gruppe von Referenzwerten ermöglicht dann das Identifizieren des jeweils zugrunde liegenden Produktfehlers bzw. der jeweils zugrunde liegenden Produktfehlerursache. Die Dimensionsreduzierung des Prüfwerts bzw. der Referenzwerte führt nämlich zu einer Gruppenbildung von Prüfwerten bzw. Referenzwerten, die untereinander eine Ähnlichkeit im Sinne eines identischen oder ähnlichen Produktfehlers sowie einer identischen oder ähnlichen Produktfehlerursache aufweisen. Somit kann über die Zuordnung zu einer dieser Gruppen von Referenzwerten ein Identifizieren des Produktfehlers bzw. der Produktfehlerursache erfolgen.

Das erfindungsgemäße Verfahren führt somit zu dem Vorteil, dass auf vergleichsweise einfache Art und Weise und insbesondere automatisiert eine vollständige oder zumindest weitestgehend vollständige Prüfung eines komplexen Produkts auf Produktfehler ermöglicht wird. Dies ermöglicht dann in Folge eine einfache oder evtl. sogar automatische Entscheidungsfindung, wie mit dem fehlerhaften Produkt weiter verfahren werden soll, ob ggf. eine Reparatur möglich und wirtschaftlich sinnvoll ist oder ob das fehlerhafte Produkt einer Entsorgung zugeführt werden muss. Gleichzeitig kann auch die dem jeweils festgestellten Produktfehler zugrunde liegende Produktfehlerursache automatisiert ermittelt werden, so dass hier ebenfalls auf vergleichsweise einfache Art und Weise und insbesondere automatisiert eine Überprüfung des entsprechenden Fertigungsschritts erfolgen kann, insbesondere dann, wenn der zugrunde liegende Produktfehler häufiger auftritt.

Gemäß einer bevorzugten Ausführungsform der Erfindung ist es vorgesehen, dass die Vielzahl von Referenzwerten bei einem Einlernen nach Produktfehlern und/oder Produktfehlerursachen klassifiziert wird. Das bedeutet, dass den Referenzwerten jeweils spezifische Produktfehler bzw. Produktfehlerursachen zugeordnet werden. Über den Vergleich des Prüfwerts mit den Referenzwerten und den ihnen zugeordneten Produktfehlern bzw. Produktfehlerursachen kann dann z.B. anhand einer Ähnlichkeit des Prüfwerts mit einem oder mehreren referenzwerten, insbesondere mit einer Gruppe von Referenzwerten, auf Produktfehler bzw. Produktfehlerursachen geschlossen werden.

Die Klassifizierung der Referenzwerte nach Produktfehlern bzw. Produktfehlerursachen erfolgt bevorzugt manuell durch einen menschlichen Bediener, indem fehlerhafte Produkte manuell hinsichtlich ihrer spezifischen Produktfehler und, soweit feststellbar, der Produktfehlerursachen untersucht werden. Diese festgestellten Produktfehler bzw. Produktfehlerursachen können dann manuell den Prüfinformationen und damit den Prüfwerten dieser Produkte zugeordnet werden. Anschließend werden die solcherart klassifizierten Prüfwerte als Referenzwerte für das erfindungsgemäße Verfahren verwendet.

Es ist dabei auch möglich und bevorzugt, dass ein Referenzwert mehr als nur einen Produktfehler beschreibt, da am Produkt auch mehr als nur ein Produktfehler gleichzeitig auftreten kann. Sofern ein eindeutiges Identifizieren eines konkreten Produktfehlers nicht möglich ist, kann auch eine Wahrscheinlichkeit angegeben werden, mit welcher der konkrete Produktfehler bzw. eine Reihe weiterer möglicher Produktfehler vorliegen. Dies ist z.B. dann der Fall, wenn der dimensionsreduzierte Prüfwert, ggf. unter Berücksichtigung von Toleranzen, mehr als nur einer Gruppe von Referenzwerten zugeordnet werden kann.

Ebenso kann auch eine mögliche Produktfehlerursache mit einer bestimmten Wahrscheinlichkeit versehen sein, sofern ein Identifizieren des konkreten Produktfehlers nicht eindeutig möglich ist.

Gemäß einer weiteren bevorzugten Ausführungsform der Erfindung ist es vorgesehen, dass die Zuordnung nach Maßgabe einer Distanzmatrix erfolgt. Die Distanzmatrix zeigt Abstände zwischen dem Prüfwert und unterschiedlichen Referenzwerten bzw. den unterschiedlichen Gruppen von Referenzwerten an. Je nachdem, wie groß die Abstände des Prüfwerts zu den unterschiedlichen Referenzwerten bzw. den unterschiedlichen Gruppen von Referenzwerten sind, kann eine höhere oder geringere Ähnlichkeit des Prüfwerts zu den entsprechenden Referenzwerten bzw. den entsprechenden Gruppen von Referenzwerten festgestellt werden. Die Distanzmatrix kann dabei auch bestimmte Toleranzen enthalten, innerhalb derer ein bestimmter Grad von Ähnlichkeit festgestellt wird. Dies ermöglicht eine zuverlässige Zuordnung des Prüfwerts auch noch bei nur geringen Ähnlichkeiten.

Gemäß einer weiteren bevorzugten Ausführungsform der Erfindung ist es vorgesehen, dass die Referenzwerte mittels des mindestens einen Statistikprozesses auf eine identische Dimensionszahl wie der dimensionsreduzierte Prüfwert dimensionsreduziert werden. Daraus ergibt sich der Vorteil, dass aufgrund der identischen Dimensionszahl eine optimale Vergleichbarkeit des Prüfwerts mit den Referenzwerten bzw. mit den Gruppen von Referenzwerten gegeben ist.

Bevorzugt wird dabei zur Dimensionsreduzierung der Referenzwerte auf den identischen Statistikprozess zurückgegriffen wie für die Dimensionsreduzierung des Prüfwerts. Auch dies führt zu einer weitgehend optimalen Vergleichbarkeit des Prüfwerts mit den Referenzwerten bzw. der Gruppe von Referenzwerten.

Weiterhin ist es bevorzugt, dass die Referenzwerte bereits bei ihrem Einlernen mittels des Statistikprozesses dimensionsreduziert werden oder sogar vor ihrem Einlernen mittels des Statistikprozesses dimensionsreduziert werden.

Gemäß einer weiteren bevorzugten Ausführungsform der Erfindung ist es vorgesehen, dass der dimensionsreduzierte Prüfwert mindestens 100 Dimensionen aufweist ist. Dieser Wert der Dimensionalität hat sich in der Praxis als guter Kompromiss zwischen der Informationsvielfalt der Prüfinformationen einerseits und der rechenleistungstechnischen Handhabbarkeit andererseits herausgestellt.

Insbesondere ist es vorgesehen, dass der dimensionsreduzierte Prüfwert mindestens 300 Dimensionen aufweist ist. Dies macht zwar das Zurückgreifen auf vergleichsweise leistungsstake Prozessoren notwendig, ermöglicht gleichzeitig aber auch einen vergleichsweise vielfältigen und detaillierten Vergleich mit den Referenzwerten bzw. den Gruppen von Referenzwerten, was wiederum eine vergleichsweise exakte und zuverlässiges Identifizieren der unterschiedlichsten Produktfehler und Produktfehlerursachen erlaubt.

Alternativ bevorzugt ist es vorgesehen, dass der dimensionsreduzierte Prüfwert genau zwei Dimensionen aufweist Dies ermöglicht die graphische Darstellung auf einem herkömmlichen Monitor bzw. jeder konventionellen, zweidimensionalen Anzeige für einen menschlichen Bediener. Durch das Heranziehen geeigneter Statistikprozesse kann dennoch ein zuverlässiger und vor allem aussagekräftiger Vergleich des zweidimensionalen Prüfwerts mit den Gruppen von Referenzwerten ermöglicht werden. Auch eine zuverlässige Bildung von Gruppen der Referenzwerte wird ermöglicht. Es soll noch einmal betont werden, dass, indem der Prüfwert und bevorzugt auch die Referenzwerte auf zwei Dimensionen reduziert werden, die Informationen der über die zweite Dimension hinausgehenden Dimensionen nicht gelöscht werden oder unberücksichtigt bleiben, sondern dass die Eigenschaften all dieser Dimensionen vielmehr auf die noch vorhandenen zwei Dimensionen projiziert werden, sich als auch in der zweidimensionalen Darstellung des Prüfwerts und vorteilhaft auch der Referenzwerte widerspiegeln.

Gemäß einer weiteren bevorzugten Ausführungsform der Erfindung ist es vorgesehen, dass eine Zuordbarkeit der Vielzahl von Produktelementen zu dem Produkt und/oder eine Rückverfolgbarkeit des Produkts über alle Fertigungsschritte bereitgestellt wird. Unter einer Zuordbarkeit des Produkts zu der Vielzahl von Produktelementen wird dabei im Sinne der Erfindung verstanden, dass auch nach Fertigstellung des Produkts noch nachvollziehbar bleibt, welche individuellen Produktelemente zur Herstellung des Produkts verwendet wurden und nun Bestandteile des Produkts sind. Dies kann z.B. durch entsprechende Dokumentation geschehen und setzt voraus, dass jedes Produktelement entsprechend individuell gekennzeichnet wurde. Beispielsweise kann es sich bei den Produktelementen um Zahnräder halten, die im Rahmen der Fertigung zu einem Fahrzeuggetriebe, dem Produkt, zusammengefügt wurden. Indem nun eine Zuordbarkeit der einzelnen Zahnäder zum Fahrzeuggetriebe bereitgestellt wird, bleibt auch nach der Fertigstellung des Getriebes nachvollziehbar, welche Zahnräder aus welcher Charge und von welchem Zulieferer an welcher Stelle des Getriebes verbaut wurden. Unter einer Rückverfolgbarkeit des Produkts über alle Fertigungsschritte wird dabei im Sinne der Erfindung verstanden, dass auch nach Fertigstellung des Produkts noch nachvollziehbar bleibt, welche individuellen Fertigungsstationen wann welche Fertigungsschritte am Produkt ausgeführt haben. Auch dies kann beispielsweise durch eine entsprechende Dokumentation geschehen, wobei eine Voraussetzung hierfür eine entsprechend individuelle Kennzeichnung des Produkts ist. Um im oben bereits genannten Beispiel des Getriebes und der Zahnräder zu bleiben, könnte anhand der Rückverfolgbarkeit des Getriebes über alle Fertigungsschritte z.B. auch nach der Fertigstellung des Getriebes noch nachvollzogen werden, welche Fertigungsstation welches Zahnrad wann in das Getriebe eingebaut hat.

Daraus ergibt sich der Vorteil, dass im Falle eines identifizierten Produktfehlers und ggf. einer identifizierten Produktfehlerursache Rückschlüsse gezogen werden können, bevorzugt automatisiert Rückschlüsse gezogen werden können, welches Produktelement den Produktfehler bewirkt hat und an welcher Fertigungsstation der Produktfehler entstanden ist. Bei einer Häufung von identischen Produktfehlern bzw. von identischen Produktfehlerursachen in einem vergleichsweise kurzen Zeitraum kann dann ggf. eine entsprechende Charge von Produktelementen aussortiert werden oder eine entsprechende Fertigungsstation kann geprüft bzw. gewartet werden.

Eine Fertigungsstation ist bevorzugt zur teil- oder vollautonomen Ausführung eines oder mehrerer ihr zugeordneter Fertigungsschritte ausgebildet.

Gemäß einer weiteren bevorzugten Ausführungsform der Erfindung ist es vorgesehen, dass eine Steuerung eines Herstellungsprozesses des Produkts unter Berücksichtigung von identifizierten Produktfehlern und Produktfehlerursachen erfolgt. Daraus ergibt sich der Vorteil, dass die identifizierten Produktfehler und ebenso die identifizierten Produktfehlerursachen dazu verwendet werden können, den Herstellungsprozess derart zu steuern, dass die identifizierten Produktfehler und die identifizierten Produktfehlerursachen bei der Herstellung weiterer Produkte vermieden werden können. Beispielsweise kann eine Charge von Produktelementen aussortiert werden, wenn sie zu einer Häufung von Produktfehlern führt. Ebenso kann eine Fertigungsstation geprüft werden, wenn die von ihr ausgeführten Fertigungsschritte zu einer Häufung von Produktfehlern führen. Ob die Produktfehler in letzterem Fall auf fehlerhaft ausgeführte Fertigungsschritte der entsprechenden Fertigungsstation als Produktfehlerursache zurückzuführen sind oder ob die an der Fertigungsstation verbauten Produktelemente fehlerhaft sind und die Produktfehlerursache somit unabhängig von den ausgeführten Fertigungsschritte ist, ist dabei unerheblich.

Gemäß einer weiteren bevorzugten Ausführungsform der Erfindung ist es vorgesehen, dass als Prüfinformationen akustische Informationen, mechanische Informationen und/oder elektrische Informationen erfasst werden. Daraus ergibt sich der Vorteil, dass eine möglichst an das jeweilige Produkt angepasste und gleichzeitig möglichst umfassende Prüfung ermöglicht wird. Akustische Informationen sind dabei Informationen über ein akustisches Verhalten, also eine Geräuschemission, bei einem bestimmten Prüflauf. Beispielsweise kann ein als ein Getriebe für ein Fahrzeug ausgebildetes Produkt mit unterschiedlichen Drehzahlen in einem vorgegebenen Drehzahlspektrum betrieben werden und dabei jeweils das akustische Verhalten erfasst und analysiert werden. Dies ermöglicht eine vergleichswiese einfache und schnelle aber dennoch umfassende Prüfung auch der mechanischen Eigenschaften des Getriebes, da sich insbesondere mechanische Produktfehler akustisch bemerkbar machen. Auch eine mechanische Produktfehlerursache, beispielsweise eine fehlerhafte Schraubverbindung, kann so identifiziert werden. Elektrische Informationen können sowohl reine elektrische Leitfähigkeiten und elektrische Widerstände der Produkte beschreiben als auch elektronische Diagnoseinformationen, die beispielsweise von einem Mikrocontroller des Produkts bereitgestellt werden und im Rahmen der Prüfung ausgelesen werden können. Mechanische Funktionen wiederum können beispielsweise mechanische Funktionalitäten sein, wie das Durchführen von Gangwechseln in einem als Getriebe ausgebildeten Produkt, aber auch mechanische Wirkungsgrade, um zwar prinzipiell funktionierende, aber einen fehlerhaft niedrigen Wirkungsgrad aufweisende Produkte zu identifizieren.

Gemäß einer weiteren bevorzugten Ausführungsform der Erfindung ist es vorgesehen, dass anhand eines identifizierten Produktfehlers eine Reparaturmaßnahme sowie eine Erfolgswahrscheinlichkeit und/oder ein Kostenaufwand und/oder ein Zeitaufwand der Reparaturmaßnahme des Produkts bestimmt wird. Bevorzugt erfolgt dies ebenfalls automatisiert. Über die notwendige Reparaturmaßnahme kann dann unter Berücksichtigung der zugehörigen Erfolgswahrscheinlichkeit, des Kostenaufwands bzw. des Zeitaufwands entweder automatisiert entschieden werden oder aber die entsprechenden Informationen können einem menschlichen Bediener angezeigt werden, der dann eine entsprechende Entscheidung treffen kann. Vorteilhafterweise ist zu jedem erkannten Produktfehler ein Eintrag in einer Datenbank hinterlegt, ob und ggf. welche Art von Reparaturmaßnahme zur Beseitigung des identifizierten Produktfehlers möglich ist. Unter Berücksichtigung der vorteilhafterweise ebenfalls in der Datenbank abgelegten Informationen zu Erfolgswahrscheinlichkeit bzw. Kostenaufwand bzw. Zeitaufwand der Reparaturmaßnahme kann dann entschieden werden, ob eine Reparatur bzw. ein Reparaturversuch unternommen werden soll oder ob dies wirtschaftlich nicht sinnvoll ist und das Produkt entsprechend einer Entsorgung zugeführt werden muss. Sofern zu einem speziellen, identifizierten Produktfehler keine entsprechenden Datenbankeinträge vorhanden sind, wird bevorzugt aus vorhandenen Datenbankeinträgen zu ähnlichen Produktfehlern eine notwendige Reparaturmaßnahme sowie eine Erfolgswahrscheinlichkeit, ein Kostenaufwand und ein Zeitaufwand der Reparaturmaßnahme automatisiert abgeleitet.

Insbesondere ist es bevorzugt, dass die abgeleitete Reparaturmaßnahme sowie die mit ihr verbundene Erfolgswahrscheinlichkeit, der Kostenaufwand und der Zeitaufwand der Reparaturmaßnahme im Rahmen der tatsächlich durchgeführten Reparatur verifiziert werden oder korrigiert werden. Die verifizierten oder korrigierten Informationen können dann vorteilhaft in die Datenbank übernommen werden.

Gemäß einer weiteren bevorzugten Ausführungsform der Erfindung ist es vorgesehen, dass das Verfahren automatisiert an eine Vielzahl von Produkten angepasst wird. Daraus ergibt sich vorteilhaft eine breite Verwendbarkeit des erfindungsgemäßen Verfahrens. Im Rahmen des Verfahrens kann z.B. entweder automatisiert erkannt werden, um welches Produkt es sich handelt, oder aber es kann z.B. manuell von einem menschlichen Bediener eingegeben werden, um welches Produkt es sich handelt. Anschließend kann anhand des vorgegebenen oder eingegebenen Produkts festgelegt werden, welche Prüfinformationen durch welche Prüfstände erfasst werden sollen und mit welchen Gruppen von Referenzwerten die Prüfinformationen unter Zugrundelegung welcher Distanzmatrix verglichen werden sollen. Auch der statistische Prozess zur Dimensionsreduzierung des n-dimensionalen Prüfwerts wird bevorzugt nach Maßgabe des jeweils zu prüfenden Produkts ausgewählt, da jedes Produkt aufgrund seiner unterschiedlichen Beschaffenheit unterschiedliche Prüfschwerpunkte aufweisen kann.

Gemäß einer weiteren bevorzugten Ausführungsform der Erfindung ist es vorgesehen, dass eine Benachrichtigung über identifizierte Produktfehler und/oder Produktfehlerursachen und/oder Erfolgswahrscheinlichkeit und/oder Kostenaufwand und/oder Zeitaufwand der Reparatur des Produkts automatisiert ausgegeben wird. Bevorzugt wird die Benachrichtigung an einen menschlichen Bediener ausgegeben, insbesondere an ein Aufsichtspersonal der Fertigungsanlage, welche das Produkt herstellt, oder an ein Aufsichtspersonal des mindestens einen Prüfstands, welcher das Produkt prüft. Die Benachrichtigung kann zusätzlich oder alternativ an eine übergeordnete Stelle ausgegeben werden, beispielsweise an einen Kontrollbereich eines Unternehmens, in dessen Verantwortung das Produkt hergestellt bzw. geprüft wird.

Bevorzugt wird die Benachrichtigung in Echtzeit ausgegeben. Zusätzlich kann in bestimmten Zeiträumen, beispielsweise am Ende jedes Tags, am Ende jeder Woche, am Ende jeden Monats bzw. am Ende jeden Jahres eine Zusammenfassung bzw. Übersicht über alle Benachrichtigungen ausgegeben werden.

Gemäß einer weiteren bevorzugten Ausführungsform der Erfindung ist es vorgesehen, dass das Verfahren von einer wissensbasierten künstlichen Intelligenz ausgeführt wird, wobei die künstliche Intelligenz sich selber nachtrainiert. Eine wissensbasierte künstliche Intelligenz ist ein System, welches vorteilhaft dazu verwendet werden kann, auf eine auftretende Problemstellung oder Fragestellung eine Antwort zu liefern, die auf der Grundlage formalisierten Fachwissens und daraus folgender, logischer Schlüsse gebildet wird. Dazu verfügt die künstliche Intelligenz bevorzugt über eine umfangreiche Datenbank, welche insbesondere die Vielzahl von Referenzwerten enthält. Bevorzugt trainiert die künstliche Intelligenz sich selber nach, indem sie Informationen über die Genauigkeit der von ihr identifizierten Produktfehler und Produktfehlerursachen sowie ggf. über die Erfolgswahrscheinlichkeit, den Kostenaufwand bzw. den Zeitaufwand der Reparatur erhält. Diese der künstlichen Intelligenz rückgemeldeten Informationen werden dann von der künstlichen Intelligenz vorteilhaft als Referenzwerte in der Datenbank abgelegt und für zukünftige Prüfungen herangezogen. Dadurch erfolgt schrittweise eine immer zuverlässiger werdende Identifizierung aller möglichen Produktfehler und Produktfehlerursachen.

Gemäß einer weiteren bevorzugten Ausführungsform der Erfindung ist es vorgesehen, dass das Verfahren nach Fertigstellung des Produkts ausgeführt wird. Daraus ergibt sich der Vorteil, dass die Fertigstellung des Produkts zügig und insbesondere ohne Unterbrechungen für Prüfprozesse ausgeführt werden kann. Stattdessen ermöglicht das erfindungsgemäße Verfahren eine zuverlässige Prüfung und Identifizierung von allen möglichen Produktfehlern und Produktfehlerursachen auch nach der Fertigstellung des Produkts.

Die Erfindung betrifft weiterhin eine Vorrichtung zum automatisierten Identifizieren eines Produktfehlers eines Produkts und/oder zum automatisierten Identifizieren einer Produktfehlerursache des Produktfehlers, umfassend Mittel
- zur Erzeugung des Produkts aus einer Vielzahl von Produktelementen durch eine Vielzahl von Fertigungsschritten und
- zum Erfassen einer Anzahl n von Prüfinformationen durch mindestens eine Produktprüfung, wobei die n Prüfinformationen einen n-dimensionalen Prüfwert bilden.

Die erfindungsgemäße Vorrichtung zeichnet sich aus durch Mittel
- zur Durchführung einer Dimensionsreduzierung des n-dimensionalen Prüfwerts mittels mindestens eines Statistikprozesses zu einem dimensionsreduzierten Prüfwert,
- zum Vergleich des dimensionsreduzierten Prüfwerts mit einer Vielzahl von eingelernten Referenzwerten,
- zur Zuordnung des dimensionsreduzierten Prüfwerts zu mindestens einer Gruppe von untereinander ähnlichen Referenzwerten und
- zum automatisierten Identifizieren des Produktfehlers und/oder der Produktfehlerursache anhand der Zuordnung.

Die erfindungsgemäße Vorrichtung umfasst somit vorteilhaft alle zur Durchführung des erfindungsgemäßen Verfahrens notwendigen Mittel.

Bevorzugt umfasst die Vorrichtung mindestens eine Fertigungsstation, an welcher das Produkt aus der Vielzahl von Produktelementen durch die Vielzahl von Fertigungsschritten hergestellt wird. Die mindestens eine Fertigungsstation ist bevorzugt teilautonom oder vollautonom ausgebildet und wird von der Vorrichtung über geeignete Softwaremittel gesteuert.

Weiterhin bevorzugt umfasst die Vorrichtung mindestens einen Prüfstand, an welchem die n Prüfinformationen erfasst werden. Der mindestens eine Prüfstand ist bevorzugt teilautonom oder vollautonom ausgebildet und wird von der Vorrichtung über geeignete Softwaremittel gesteuert.

Ebenfalls bevorzugt umfasst die Vorrichtung auch elektronische Rechenmittel, z.B. in Form eines geeigneten Mikroprozessors, Arbeitsspeichers und Festspeichers zur Durchführung der Dimensionsreduzierung des n-dimensionalen Prüfwerts, zum Vergleich des dimensionsreduzierten Prüfwerts, zur Zuordnung des dimensionsreduzierten Prüfwerts und zum automatisierten Identifizieren des Produktfehlers und/oder der Produktfehlerursache gemäß entsprechend ausgelegter Software-Algorithmen.

Des Weiteren umfasst die Vorrichtung bevorzugt auch Ausgabemittel zur Ausgabe von Benachrichtigungen an menschliche Bediener, beispielsweise optische Anzeigen wie Monitore und Warnlampen, akustische Ausgabemittel wie Lautsprecher sowie eine Anbindung an ein Kommunikationssystem wie z.B. ein Email-System. Somit kann die Vorrichtung die Benachrichtigungen also beispielsweise optisch und akustisch ausgeben oder per Email versenden. Auch eine Anbindung der Vorrichtung an ein proprietäres Kommunikationssystem ist denkbar, welches beispielsweise das Versenden von Benachrichtigungen ähnlich wie ein Email-System ermöglicht, aber ausschließlich auf einem internen Netzwerk ohne Verbindung zum Internet betrieben wird.

Gemäß einer bevorzugten Ausführungsform der Erfindung ist es vorgesehen, dass die Vorrichtung zur Ausführung des erfindungsgemäßen Verfahrens ausgebildet ist. Daraus ergeben sich die bereits im Zusammenhang mit dem erfindungsgemäßen Verfahren beschriebenen Vorteile.

Nachfolgend wird die Erfindung anhand von in den Figuren dargestellten Ausführungsformen beispielhaft erläutert.

Es zeigen:
- Fig. 1: beispielhaft und schematisch einen Herstellungsprozess eines Produkts,
- Fig. 2: beispielhaft eine durch das erfindungsgemäße Verfahren erzielbare Vereinfachung gegenüber einem im Stand der Technik üblichen Vergleichsprozess,
- Fig. 3: beispielhaft und schematisch in Form einer Tabelle unterschiedliche Varianten von Produkten sowie ihnen zugeordnete Gruppen von Referenzwerten,
- Fig. 4: beispielhaft und schematisch mehrere Gruppen von Referenzwerten und
- Fig. 5: beispielhaft eine mögliche Ausführungsform des erfindungsgemäßen Verfahrens zum automatisierten Identifizieren eines Produktfehlers eines Produkts und/oder zum automatisierten Identifizieren einer Produktfehlerursache des Produktfehlers in Form eines Flussdiagramms.

Gleiche Gegenstände, Funktionseinheiten und vergleichbare Komponenten sind figu-renübergreifend mit den gleichen Bezugszeichen bezeichnet. Diese Gegenstände, Funktionseinheiten und vergleichbaren Komponenten sind hinsichtlich ihrer technischen Merkmale identisch ausgeführt, sofern sich aus der Beschreibung nicht explizit oder implizit etwas anderes ergibt.

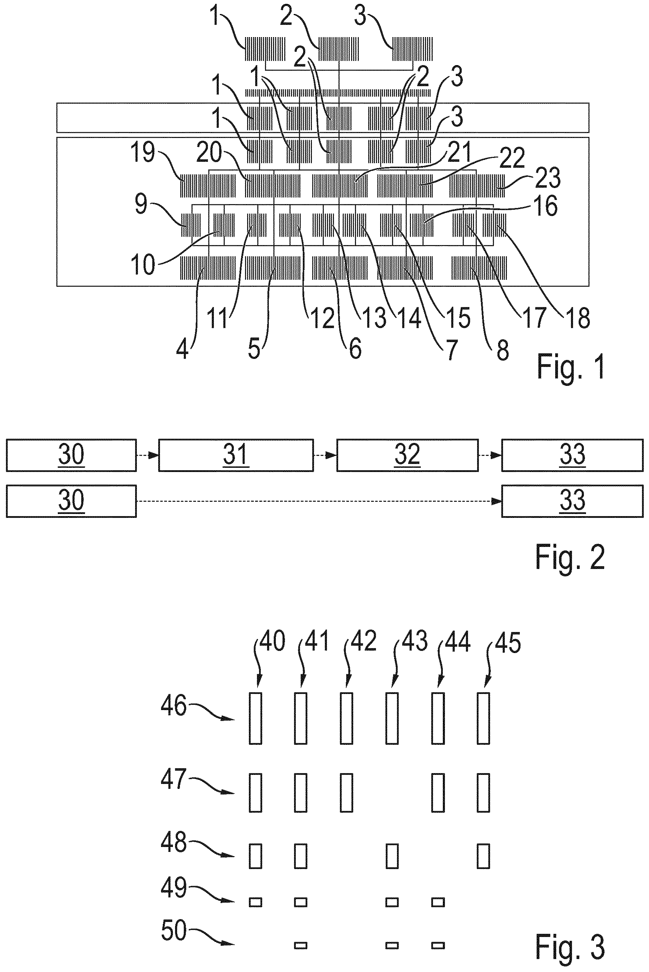

Fig. 1 zeigt beispielhaft und schematisch einen Herstellungsprozess eines Produkts und die damit einhergehende Komplexität der Identifizierung eines Produktfehlers des Produkts und der Identifizierung der zugrunde liegenden Produktfehlerursache. Im Rahmen des beispielhaft gezeigten Herstellungsprozesses werden beispielsgemäß drei unterschiedliche Varianten 1, 2, 3 eines als Fahrzeuggetriebe 1, 2, 3 ausgebildeten Produkts 1, 2, 3 hergestellt. Die Fahrzeuggetriebe 1, 2, 3 werden jeweils aus einer Vielzahl von Produktelementen 4, 5, 6, 7, 8, 9, 10, 11, 12, 13, 14, 15, 16, 17, 18 in einer Vielzahl von Fertigungsschritten hergestellt, wobei ein erster Anteil von Produktelementen 4, 5, 6, 7, 8 zugeliefert wird und ein zweiter Anteil von Produktelementen 9, 10, 11, 12, 13, 14, 15, 16, 17, 18 selbst hergestellt wird. Sowohl die zugelieferten Produktelemente 4, 5, 6, 7, 8 als auch die selbst hergestellten Produktelemente 9, 10, 11, 12, 13, 14, 15, 16, 17, 18 können dabei einen Produktfehler aufweisen. Beispielsgemäß weisen das zugelieferte Produktelement 5 und das selbst hergestellte Produktelement 13 jeweils einen Produktfehler auf. Die Vielzahl von Produktelementen 4, 5, 6, 7, 8, 9, 10, 11, 12, 13, 14, 15, 16, 17, 18 wird in einem erstem Montageschritt, beispielsgemäß einer Vormontage, zu Baugruppen 19, 20, 21, 22, 23 zusammengefügt. Gemäß dem Beispiel der Fig. 1 entsteht beim Zusammenbau der Baugruppe 20 ein Produktfehler. Die Baugruppen 19, 20, 21, 22, 23 werden dann in einem weiteren Montageschritt, beispielsgemäß der Endmontage, zu den vollständigen Produkten 1, 2, 3, nämlich den Fahrzeuggetrieben 1, 2, 3, zusammengefügt, wobei die Fahrzeuggetriebe 1 und 2 beispielsgemäß in größerer Stückzahl produziert werden als das Fahrzeuggetriebe 3. Ebenfalls beispielsgemäß entsteht bei der Endmontage des Fahrzeuggetriebes 3 ein Produktfehler. Nach der Endmontage werden die Fahrzeuggetriebe 1, 2, 3 gemäß dem erfindungsgemäßen Verfahren zum automatisierten Identifizieren eines Produktfehlers eines Produkts und/oder zum automatisierten Identifizieren einer Produktfehlerursache des Produktfehlers geprüft. Der Vorteil des erfindungsgemäßen Verfahrens liegt vor allem darin, dass erst die vollständig montierten Produkte 1, 2, 3, also die Fahrzeuggetriebe 1, 2, 3, geprüft werden und nicht nach jedem Montageschritt bzw. nach der Zulieferung oder der Herstellung der Vielzahl von Produktelementen 4, 5, 6, 7, 8, 9, 10, 11, 12, 13, 14, 15, 16, 17, 18 eine Reihe von Einzelprüfungen vorgenommen werden muss. Das erfindungsgemäße Verfahren umfasst die Schritte
- Erzeugung des Produkts 1, 2, 3 aus einer Vielzahl von Produktelementen 4, 5, 6, 7, 8, 9, 10, 11, 12, 13, 14, 15, 16, 17, 18 durch eine Vielzahl von Fertigungsschritten und
- Erfassen einer Anzahl n von Prüfinformationen durch mindestens eine Produktprüfung, wobei die n Prüfinformationen einen n-dimensionalen Prüfwert bilden,
- Durchführung einer Dimensionsreduzierung des n-dimensionalen Prüfwerts mittels mindestens eines Statistikprozesses zu einem dimensionsreduzierten Prüfwert,
- Vergleich des dimensionsreduzierten Prüfwerts mit einer Vielzahl von eingelernten Referenzwerten,
- Zuordnung des dimensionsreduzierten Prüfwerts zu mindestens einer Gruppe von untereinander ähnlichen Referenzwerten und
- automatisiertes Identifizieren des Produktfehlers und/oder der Produktfehlerursache anhand der Zuordnung.

Damit wird ein zuverlässiges Identifizieren nicht nur der vorhandenen Produktfehler sondern auch der den Produktfehlern zugrunde liegenden Produktfehlerursachen nach der vollständigen Herstellung der Produkte 1, 2, 3 ermöglicht. Gemäß dem Ausführungsbeispiel der Fig. 1 werden die Fahrzeuggetriebe 1, 2, 3 einer akustischen Prüfung unterworfen, wobei insgesamt 170 • 10⁶ Prüfinformationen erfasst werden. Mittels des Statistikprozesses wird nun eine Dimensionsreduzierung des 170 • 10⁶-dimensionalen Prüfwerts auf einen dimensionsreduzierten Prüfwert, nämlich beispielsgemäß einen 1200-dimensionalen Prüfwert, durchgeführt. Beispielsgemäß zeigt sich, dass eines der Fahrzeuggetriebe 1, beide Fahrzeuggetriebe 2 und das Fahrzeuggetriebe 3 jeweils einen Produktfehler aufweisen. Durch das erfindungsgemäße Verfahren zeigt sich weiterhin, dass der Produktfehler des Fahrzeuggetriebes 1 auf das fehlerbehaftete zugelieferte Produktelement 5 als Produktfehlerursache zurückgeht. Die Produktfehler der zwei Fahrzeuggetriebe 2 gehen einmal auf das fehlerbehaftete selbst hergestellte Produktelement 13 sowie auf eine fehlerbehaftete Vormontage der Baugruppe 20 als Produktfehlerursache zurück. Bei dem Produktfehler des Fahrzeuggetriebes 3 schließlich zeigt sich, dass dieser auf eine fehlerbehaftete Endmontage des Fahrzeuggetriebes 3 zurückgeht.

Fig. 2 zeigt beispielhaft eine durch das erfindungsgemäße Verfahren erzielbare Vereinfachung gegenüber einem im Stand der Technik üblichen Vergleichsprozess in Form eines Flussdiagramms. Das bekannte Verfahren ist dabei in Fig. 2 oben dargestellt, das erfindungsgemäße Verfahren ist in Fig. 2 unten dargestellt. Gemäß dem Stand der Technik wird in einem Verfahrensschritt 30 zunächst ein Produktfehler eines Produkts 1, 2, 3 identifiziert. Dies geschieht ebenfalls im Rahmen des erfindungsgemäßen Verfahrens in Schritt 30. Zur Identifizierung der Produktfehlerursache wird nun gemäß dem Stand der Technik das Produkt von menschlichen Fachkräften in Schritt 31 auseinandergebaut und die Vielzahl von Produktelementen 4, 5, 6, 7, 8, 9, 10, 11, 12, 13, 14, 15, 16, 17, 18 wird in Schritt 32 einzeln begutachtet und Fehler analysiert, was mit einem vergleichsweise hohen Zeitaufwand und entsprechendem Kostenaufwand verbunden ist. Der hohe Zeitaufwand resultiert vor allem auch daraus, dass eine Vielzahl von Einzeltests durchgeführt werden muss, um die Produktfehlerursache zu identifizieren. Erst in Schritt 33 wird als Ergebnis der Begutachtung und Analyse der Vielzahl von Produktelementen 4, 5, 6, 7, 8, 9, 10, 11, 12, 13, 14, 15, 16, 17, 18 die Produktfehlerursache identifiziert. Das erfindungsgemäße Verfahren hingegen ermöglicht ein automatisiertes Identifizieren nicht nur des Produktfehlers in Schritt 30 sondern auch der Produktfehlerursache in Schritt 33 durch einen Vergleich des dimensionsreduzierten Prüfwerts mit einer Vielzahl von Gruppen von eingelernten Referenzwerten. Indem der dimensionsreduzierte Prüfwert trotz der Dimensionsreduzierung mittels des mindestens einen Statistikprozesses immer noch durch alle n Prüfinformationen geprägt ist, also Ähnlichkeiten zu entsprechenden Gruppen von Referenzwerten aufweist, kann durch anschließende Zuordnung des dimensionsreduzierten Prüfwerts zu mindestens einer Gruppe von untereinander ähnlichen Referenzwerten schließlich die Produktfehlerursache identifiziert werden. Somit lassen sich gegenüber dem im Stand der Technik üblichen Verfahren merkliche Einsparungen des Zeit- und Kostenaufwands erzielen.

Fig. 3 zeigt beispielhaft und schematisch in Form einer Tabelle unterschiedliche Varianten 40, 41, 42, 43, 44, 45 von Produkten 40, 41, 42, 43, 44, 45 sowie ihnen zugeordnete Gruppen von Referenzwerten 46, 47, 48, 49, 50, gegen welche die Prüfwerte verglichen werden, um eine Zuordnung zu ermöglichen. Die Gruppen von Referenzwerten 46, 47, 48, 49, 50 beschreiben dabei jeweils unterschiedliche technische Merkmale bzw. Eigenschaften, die teilweise für mehrere oder alle Varianten 40, 41, 42, 43, 44, 45 von Produkten 40, 41, 42, 43, 44, 45 identisch sein können. Diese Erkennung der jeweiligen zu prüfenden Variante 40, 41, 42, 43, 44, 45 und der entsprechend heranzuziehenden Gruppen von Referenzwerten 46, 47, 48, 49, 50 erfolgt dabei automatisiert. Somit kann auch bei Vorliegen von unterschiedlichen Varianten 40, 41, 42, 43, 44, 45 von Produkten 40, 41, 42, 43, 44, 45 auf einfache Weise das erfindungsgemäße Verfahren zum automatisierten Identifizieren eines Produktfehlers eines Produkts und/oder zum automatisierten Identifizieren einer Produktfehlerursache des Produktfehlers ausgeführt werden.

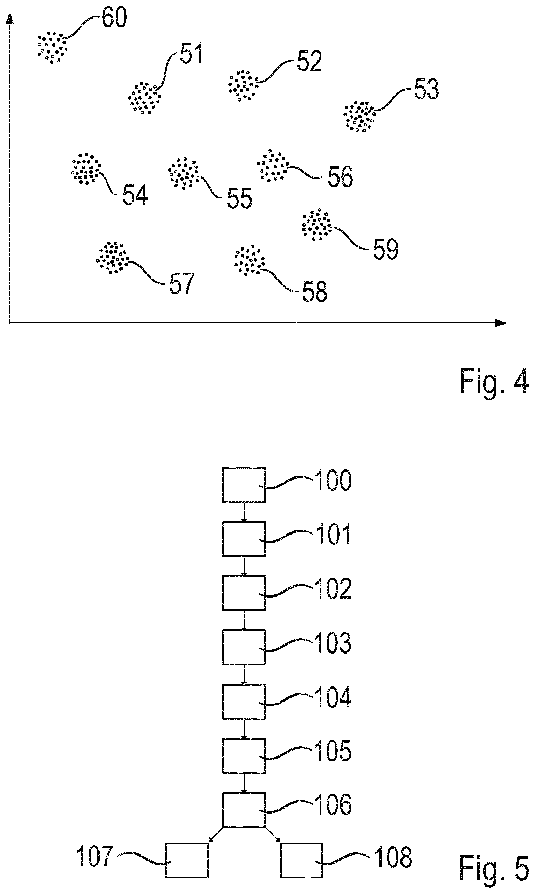

Fig. 4 zeigt beispielhaft und schematisch mehrere Gruppen 51, 52, 53, 54, 55, 56, 57, 58, 59, 60 von Referenzwerten, die mittels mindestens eines Statistikprozesses jeweils auf zwei Dimensionen dimensionsreduziert wurden. Die Referenzwerte sind dabei auch in ihrer zweidimensionalen Darstellung durch alle im mindestens einen Statistikprozess berücksichtigten Dimensionen bzw. Prüfinformationen geprägt, weshalb sich Referenzwerte, welche ähnliche Produkteigenschaften bzw. Produktfehler beschreiben, in Gruppen 51, 52, 53, 54, 55, 56, 57, 58, 59, 60 sortieren. Die x-Achse und die y-Achse weisen jeweils keine Einheit auf, da durch die Dimensionsreduzierung ohnehin die Einheiten entfallen. Ähnlichkeiten zwischen den Referenzwerten bzw. zwischen den Gruppen von Referenzwerten werden ausschließlich durch ihre jeweilige Beabstandung im Koordinatensystem dargestellt. Beispielsgemäß stellen die Referenzwerte der Gruppe 51 einen fehlerhaften Kupplungsrücksteller eines als Fahrzeuggetriebe ausgebildeten Produkts dar. Die Produktfehlerursache ist bei den Referenzwerten der Gruppe 51 eine bei der Montage versehentlich nicht eingebaute mechanische Rückstellfeder. Wenn nun ein ebenfalls auf zwei Dimensionen reduzierter Prüfwert durch seine Nähe zur Gruppe 51 dieser Gruppe 51 zugeordnet werden kann, so kann daraus erkannt werden, dass dasjenige Fahrzeuggetriebe, von welchem der Prüfwert stammt, ebenfalls einen fehlerhaften Kupplungsrücksteller aufweist, bei dem die Rückstellfeder versehentlich nicht montiert wurde. Die Gruppe 52 stellt beispielsgemäß ein voll funktionsfähiges und fehlerfreies Getriebe dar. Die weiteren Gruppen 53, 53, 54, 55, 56, 57, 58, 59, 60 stellen jeweils weitere spezifische Produktfehler sowie die ihnen zugrunde liegenden Produktfehlerursachen dar.

Fig. 5 zeigt beispielhaft eine mögliche Ausführungsform des erfindungsgemäßen Verfahrens zum automatisierten Identifizieren eines Produktfehlers eines Produkts und/oder zum automatisierten Identifizieren einer Produktfehlerursache des Produktfehlers in Form eines Flussdiagramms. In Verfahrensschritt 100 erfolgt zunächst eine Erzeugung des Produkts 1, 2, 3, 40, 41, 42, 43, 44, 45 aus einer Vielzahl von Produktelementen 4, 5, 6, 7, 8, 9, 10, 11, 12, 13, 14, 15, 16, 17, 18 durch eine Vielzahl von Fertigungsschritten. In Schritt 101, nach einer Fertigstellung des Produkts 1, 2, 3, 40, 41, 42, 43, 44, 45, erfolgt ein Erfassen einer Anzahl n von Prüfinformationen durch mindestens eine Produktprüfung, wobei die n Prüfinformationen einen n-dimensionalen Prüfwert bilden. Als Prüfinformationen werden akustische Informationen, mechanische Informationen sowie elektrische Informationen erfasst. Im folgenden Schritt 102 erfolgt eine Durchführung einer Dimensionsreduzierung des n-dimensionalen Prüfwerts mittels mindestens eines Statistikprozesses zu einem dimensionsreduzierten Prüfwert, welcher in Schritt 103 mit einer Vielzahl von eingelernten Referenzwerten 51, 52, 53, 54, 55, 56, 57, 58, 59, 60 verglichen wird, wobei die Referenzwerte eine identische Dimensionszahl aufweisen wie der dimensionsreduzierte Prüfwert. In Verfahrensschritt 104 erfolgt dann eine Zuordnung des dimensionsreduzierten Prüfwerts nach Maßgabe einer Distanzmatrix zu mindestens einer Gruppe von untereinander ähnlichen Referenzwerten 51, 52, 53, 54, 55, 56, 57, 58, 59, 60, was schließlich in Schritt 105 ein Identifizieren des Produktfehlers und gleichzeitig in Schritt 106 ein Identifizieren der Produktfehlerursache anhand der Zuordnung erlaubt. Anhand des in Schritt 106 identifizierten Produktfehlers bzw. der Produktfehlerursache erfolgt im folgenden Schritt 107 eine Steuerung eines Herstellungsprozesses des Produkts 1, 2, 3, 40, 41, 42, 43, 44, 45 in dem Sinne, dass der Herstellungsprozess derart beeinflusst, geändert bzw. korrigiert wird, dass die identifizierte Produktfehlerursache vermieden wird und der identifizierte Produktfehler bei den später hergestellten Produkten 1, 2, 3, 40, 41, 42, 43, 44, 45 entsprechend nicht mehr auftritt. Gleichzeitig zu Schritt 107 wird in Schritt 108 eine Benachrichtigung über den identifizierten Produktfehler, die Produktfehlerursache, die Erfolgswahrscheinlichkeit einer Reparatur, den Kostenaufwand der Reparatur und den Zeitaufwand der Reparatur des Produkts 1, 2, 3, 40, 41, 42, 43, 44, 45 automatisiert an eine Gruppe von menschlichen Bedienern ausgegeben. Beispielsgemäß wird das Verfahren von einer wissensbasierten künstlichen Intelligenz ausgeführt wird, welche sich selber anhand der ihr zugeführten Referenzwerte nachtrainiert.

### Bezugszeichen

- 1, 2, 3: Produkt, Fahrzeuggetriebe
- 4, 5, 6, 7, 8, 9, 10: Produktelement
- 11, 12, 13, 14, 15: Produktelement
- 16, 17, 18: Produktelement
- 19, 20, 21, 22, 23: Baugruppe
- 30: Identifizieren eines Produktfehlers
- 31: Identifizierung einer Produktfehlerursache durch menschliche Fachkräfte
- 32: Begutachtung und Analyse einer Vielzahl von Produktelementen durch menschliche Fachkräfte
- 33: Identifizieren einer Fehlerursache
- 34: Antrieb des Fahrantriebs zusätzlich durch ersten Elektromotor
- 40, 41, 42: Produkt, Fahrzeuggetriebe
- 43, 44, 45: Produkt, Fahrzeuggetriebe
- 46, 47, 48, 49, 50: Gruppe von Referenzwerten
- 51, 52, 53, 54, 55: Gruppe von Referenzwerten
- 56, 57, 58, 59, 60: Gruppe von Referenzwerten
- 100: Erzeugung eines Produkts
- 101: Erfassen einer Anzahl n von Prüfinformationen
- 102: Durchführung einer Dimensionsreduzierung
- 103: Vergleich mit einer Vielzahl von eingelernten Referenzwerten
- 104: Zuordnung des dimensionsreduzierten Prüfwerts zu mindestens einer Gruppe von untereinander ähnlichen Referenzwerten
- 105: Identifizieren des Produktfehlers
- 106: Identifizieren der Produktfehlerursache
- 107: Steuerung eines Herstellungsprozesses
- 108: Ausgabe einer Benachrichtigung

## Patentansprüche

1. Verfahren zum automatisierten Identifizieren eines Produktfehlers eines Produkts (1, 2, 3, 40, 41, 42, 43, 44, 45) und/oder zum automatisierten Identifizieren einer Produktfehlerursache des Produktfehlers,
umfassend die Schritte
- Erzeugung des Produkts (1, 2, 3, 40, 41, 42, 43, 44, 45, 100) aus einer Vielzahl von Produktelementen (4, 5, 6, 7, 8, 9, 10, 11, 12, 13, 14, 15, 16, 17, 18) durch eine Vielzahl von Fertigungsschritten und
- Erfassen einer Anzahl n von Prüfinformationen , die eine bestimmte Eigenschaft des Produkts beschreiben, durch mindestens eine Produktprüfung (101), wobei die n Prüfinformationen einen n-dimensionalen Prüfwert bilden, wobei das Verfahren auch die folgenden Schritte umfasst
- Durchführung einer Dimensionsreduzierung des n-dimensionalen Prüfwerts (102) mittels mindestens eines Statistikprozesses zu einem dimensionsreduzierten Prüfwert,
- Vergleich des dimensionsreduzierten Prüfwerts (103) mit einer Vielzahl von eingelernten Referenzwerten (46, 47, 48, 49, 50, 51, 52, 53, 54, 55, 56, 57, 58, 59, 60),
- wobei die Referenzwerte (46, 47, 48, 49, 50, 51, 52, 53, 54, 55, 56, 57, 58, 59, 60) mittels des mindestens einen Statistikprozesses auf eine identische Dimensionszahl wie der dimensionsreduzierte Prüfwert dimensionsreduziert werden,
- wobei zur Dimensionsreduzierung der Referenzwerte (46, 47, 48, 49, 50, 51, 52, 53, 54, 55, 56, 57, 58, 59, 60) auf den identischen Statistikprozess zurückgegriffen wie für die Dimensionsreduzierung des Prüfwerts,
- Zuordnung des dimensionsreduzierten Prüfwerts zu mindestens einer Gruppe, die einem oder mehreren Produktfehlern bzw. Produktfehlerursachen entspricht, von untereinander ähnlichen Referenzwerten (46, 47, 48, 49, 50, 51, 52, 53, 54, 55, 56, 57, 58, 59, 60, 104) und
- automatisiertes Identifizieren des Produktfehlers (105) und/oder der Produktfehlerursache (106) anhand der Zuordnung.

2. Verfahren nach Anspruch 1,
**dadurch gekennzeichnet, dass** die Vielzahl von Referenzwerten (46, 47, 48, 49, 50, 51, 52, 53, 54, 55, 56, 57, 58, 59, 60) bei einem Einlernen nach Produktfehlern und/oder Produktfehlerursachen klassifiziert wird.

3. Verfahren nach mindestens einem der Ansprüche 1 und 2,
**dadurch gekennzeichnet, dass** die Zuordnung nach Maßgabe einer Distanzmatrix erfolgt (104).

4. Verfahren nach mindestens einem der Ansprüche 1 bis 3,
**dadurch gekennzeichnet, dass** der dimensionsreduzierte Prüfwert mindestens 100 Dimensionen aufweist ist.

5. Verfahren nach mindestens einem der Ansprüche 1 bis 4,
**dadurch gekennzeichnet, dass** eine Zuordenbarkeit der Vielzahl von Produktelementen (4, 5, 6, 7, 8, 9, 10, 11, 12, 13, 14, 15, 16, 17, 18) zu dem Produkt (1, 2, 3, 40, 41, 42, 43, 44, 45) und/oder eine Rückverfolgbarkeit des Produkts (1, 2, 3, 40, 41, 42, 43, 44, 45) über alle Fertigungsschritte bereitgestellt wird.

6. Verfahren nach mindestens einem der Ansprüche 1 bis 5,
**dadurch gekennzeichnet, dass** eine Steuerung eines Herstellungsprozesses des Produkts (1, 2, 3, 40, 41, 42, 43, 44, 45) unter Berücksichtigung von identifizierten Produktfehlern und Produktfehlerursachen erfolgt (107).

7. Verfahren nach mindestens einem der Ansprüche 1 bis 6,
**dadurch gekennzeichnet, dass** als Prüfinformationen akustische Informationen, mechanische Informationen und/oder elektrische Informationen erfasst werden.

8. Verfahren nach mindestens einem der Ansprüche 1 bis 7,
**dadurch gekennzeichnet, dass** anhand eines identifizierten Produktfehlers eine Reparaturmaßnahme sowie eine Erfolgswahrscheinlichkeit und/oder ein Kostenaufwand und/oder ein Zeitaufwand der Reparaturmaßnahme des Produkts bestimmt wird (101).

9. Verfahren nach mindestens einem der Ansprüche 1 bis 8,
**dadurch gekennzeichnet, dass** das Verfahren automatisiert an eine Vielzahl von Produkten (1, 2, 3, 40, 41, 42, 43, 44, 45) angepasst wird.

10. Verfahren nach mindestens einem der Ansprüche 1 bis 9,
**dadurch gekennzeichnet, dass** eine Benachrichtigung über identifizierte Produktfehler und/oder Produktfehlerursachen und/oder Erfolgswahrscheinlichkeit und/oder Kostenaufwand und/oder Zeitaufwand der Reparatur des Produkts automatisiert ausgegeben wird (108).

11. Verfahren nach mindestens einem der Ansprüche 1 bis 10,
**dadurch gekennzeichnet, dass** das Verfahren von einer wissensbasierten künstlichen Intelligenz ausgeführt wird, wobei die künstliche Intelligenz sich selber nachtrainiert.

12. Verfahren nach mindestens einem der Ansprüche 1 bis 11,
**dadurch gekennzeichnet, dass** das Verfahren nach Fertigstellung des Produkts (1, 2, 3, 40, 41, 42, 43, 44, 45) ausgeführt wird.

13. Vorrichtung zum automatisierten Identifizieren eines Produktfehlers eines Produkts (1, 2, 3, 40, 41, 42, 43, 44, 45) und/oder zum automatisierten Identifizieren einer Produktfehlerursache des Produktfehlers,
umfassend Mittel
- zur Erzeugung des Produkts (1, 2, 3, 40, 41, 42, 43, 44, 45) aus einer Vielzahl von Produktelementen (4, 5, 6, 7, 8, 9, 10, 11, 12, 13, 14, 15, 16, 17, 18) durch eine Vielzahl von Fertigungsschritten und
- zum Erfassen einer Anzahl n von Prüfinformationen **,** die eine bestimmte Eigenschaft des Produkts beschreiben, durch mindestens eine Produktprüfung, wobei die n Prüfinformationen einen n-dimensionalen Prüfwert bilden, wobei die Vorrichtung auch die folgenden Mittel umfasst,
- zur Durchführung einer Dimensionsreduzierung des n-dimensionalen Prüfwerts mittels mindestens eines Statistikprozesses zu einem dimensionsreduzierten Prüfwert,
- zum Vergleich des dimensionsreduzierten Prüfwerts mit einer Vielzahl von eingelernten Referenzwerten (46, 47, 48, 49, 50, 51, 52, 53, 54, 55, 56, 57, 58, 59, 60),
- wobei die Referenzwerte (46, 47, 48, 49, 50, 51, 52, 53, 54, 55, 56, 57, 58, 59, 60) mittels des mindestens einen Statistikprozesses auf eine identische Dimensionszahl wie der dimensionsreduzierte Prüfwert dimensionsreduziert werden,
- wobei zur Dimensionsreduzierung der Referenzwerte (46, 47, 48, 49, 50, 51, 52, 53, 54, 55, 56, 57, 58, 59, 60) auf den identischen Statistikprozess zurückgegriffen wie für die Dimensionsreduzierung des Prüfwerts,
- zur Zuordnung des dimensionsreduzierten Prüfwerts zu mindestens einer Gruppe , die einem oder mehreren Produktfehlern bzw. Produktfehlerursachen entspricht, von untereinander ähnlichen Referenzwerten (46, 47, 48, 49, 50, 51, 52, 53, 54, 55, 56, 57, 58, 59, 60) und
- zum automatisierten Identifizieren des Produktfehlers und/oder der Produktfehlerursache anhand der Zuordnung.

14. Vorrichtung nach Anspruch 13,
**dadurch gekennzeichnet, dass** die Vorrichtung zur Ausführung eines Verfahrens nach mindestens einem der Ansprüche 1 bis 12 ausgebildet ist.

## Claims

1. Method for automatically identifying a product defect of a product (1, 2, 3, 40, 41, 42, 43, 44, 45) and/or for automatically identifying a product defect cause of the product defect,
comprising the steps of
- producing the product (1, 2, 3, 40, 41, 42, 43, 44, 45, 100) from a multiplicity of product elements (4, 5, 6, 7, 8, 9, 10, 11, 12, 13, 14, 15, 16, 17, 18) by way of a multiplicity of manufacturing steps, and
- capturing a number n of items of test information describing a particular property of the product by means of at least one product test (101), wherein the n items of test information form an n-dimensional test value,
wherein the method also comprises the following steps
- carrying out a dimensional reduction of the n-dimensional test value (102) by means of at least one statistical process to give a dimensionally reduced test value,
- comparing the dimensionally reduced test value (103) with a multiplicity of learned reference values (46, 47, 48, 49, 50, 51, 52, 53, 54, 55, 56, 57, 58, 59, 60),
- wherein the reference values (46, 47, 48, 49, 50, 51, 52, 53, 54, 55, 56, 57, 58, 59, 60) are dimensionally reduced to an identical number of dimensions as the dimensionally reduced test value by means of the at least one statistical process,
- wherein, for the dimensional reduction of the reference values (46, 47, 48, 49, 50, 51, 52, 53, 54, 55, 56, 57, 58, 59, 60), recourse is had to the identical statistical process as for the dimensional reduction of the test value,
- assigning the dimensionally reduced test value to at least one group of mutually similar reference values (46, 47, 48, 49, 50, 51, 52, 53, 54, 55, 56, 57, 58, 59, 60, 104), said group corresponding to one or more product defects or product defect causes, and
- automatically identifying the product defect (105) and/or the product defect cause (106) on the basis of the assignment.

2. Method according to Claim 1,
**characterized in that** the multiplicity of reference values (46, 47, 48, 49, 50, 51, 52, 53, 54, 55, 56, 57, 58, 59, 60) are classified according to product defects and/or product defect causes during learning.

3. Method according to at least one of Claims 1 and 2, **characterized in that** the assignment is carried out (104) according to a distance matrix.

4. Method according to at least one of Claims 1 to 3, **characterized in that** the dimensionally reduced test value is has at least 100 dimensions.

5. Method according to at least one of Claims 1 to 4, **characterized in that** an assignability of the multiplicity of product elements (4, 5, 6, 7, 8, 9, 10, 11, 12, 13, 14, 15, 16, 17, 18) to the product (1, 2, 3, 40, 41, 42, 43, 44, 45) and/or traceability of the product (1, 2, 3, 40, 41, 42, 43, 44, 45) is/are provided across all manufacturing steps.

6. Method according to at least one of Claims 1 to 5, **characterized in that** a process of producing the product (1, 2, 3, 40, 41, 42, 43, 44, 45) is controlled (107) taking into account identified product defects and product defect causes.

7. Method according to at least one of Claims 1 to 6, **characterized in that** acoustic information, mechanical information and/or electrical information is captured as test information.

8. Method according to at least one of Claims 1 to 7, **characterized in that** a repair measure and a probability of success and/or a cost and/or a time needed for the repair measure of the product are determined (101) on the basis of an identified product defect.

9. Method according to at least one of Claims 1 to 8, **characterized in that** the method is automatically adapted to a multiplicity of products (1, 2, 3, 40, 41, 42, 43, 44, 45).

10. Method according to at least one of Claims 1 to 9, **characterized in that** a notification of identified product defects and/or product defect causes and/or the probability of success and/or cost and/or time needed for the repair of the product is output (108) automatically.

11. Method according to at least one of Claims 1 to 10, **characterized in that** the method is carried out by knowledge-based artificial intelligence, wherein the artificial intelligence retrains itself.

12. Method according to at least one of Claims 1 to 11, **characterized in that** the method is carried out after the product (1, 2, 3, 40, 41, 42, 43, 44, 45) has been completed.

13. Apparatus for automatically identifying a product defect of a product (1, 2, 3, 40, 41, 42, 43, 44, 45) and/or for automatically identifying a product defect cause of the product defect,
comprising means
- for producing the product (1, 2, 3, 40, 41, 42, 43, 44, 45) from a multiplicity of product elements (4, 5, 6, 7, 8, 9, 10, 11, 12, 13, 14, 15, 16, 17, 18) by way of a multiplicity of manufacturing steps, and
- for capturing a number n of items of test information describing a particular property of the product by means of at least one product test, wherein the n items of test information form an n-dimensional test value,
wherein the apparatus also comprises the following means
- for carrying out a dimensional reduction of the n-dimensional test value by means of at least one statistical process to give a dimensionally reduced test value,
- for comparing the dimensionally reduced test value with a multiplicity of learned reference values (46, 47, 48, 49, 50, 51, 52, 53, 54, 55, 56, 57, 58, 59, 60),
- wherein the reference values (46, 47, 48, 49, 50, 51, 52, 53, 54, 55, 56, 57, 58, 59, 60) are dimensionally reduced to an identical number of dimensions as the dimensionally reduced test value by means of the at least one statistical process,
- wherein, for the dimensional reduction of the reference values (46, 47, 48, 49, 50, 51, 52, 53, 54, 55, 56, 57, 58, 59, 60), recourse is had to the identical statistical process as for the dimensional reduction of the test value,
- for assigning the dimensionally reduced test value to at least one group of mutually similar reference values (46, 47, 48, 49, 50, 51, 52, 53, 54, 55, 56, 57, 58, 59, 60), said group corresponding to one or more product defects or product defect causes, and
- for automatically identifying the product defect and/or the product defect cause on the basis of the assignment.

14. Apparatus according to Claim 13,
**characterized in that** the apparatus is designed to carry out a method according to at least one of Claims 1 to 12.

## Revendications

1. Procédé d'identification automatisée d'un défaut d'un produit (1, 2, 3, 40, 41, 42, 43, 44, 45) et/ou d'identification automatisée d'une cause du défaut du produit,
comprenant les étapes suivantes
- production du produit (1, 2, 3, 40, 41, 42, 43, 44, 45, 100) à partir d'une pluralité d'éléments du produit (4, 5, 6, 7, 8, 9, 10, 11, 12, 13, 14, 15, 16, 17, 18) par une pluralité d'étapes de fabrication, et
- détection d'un nombre n d'informations de contrôle qui décrivent une propriété spécifique du produit, par au moins un contrôle de produit (101), les n informations de contrôle constituant une valeur de contrôle à n dimensions,
le procédé comprenant également les étapes suivantes
- exécution d'une réduction dimensionnelle de la valeur de contrôle à n dimensions (102) au moyen d'au moins un traitement statistique pour obtenir une valeur de contrôle à dimensions réduites,
- comparaison entre la valeur de contrôle à dimensions réduites (103) et une pluralité de valeurs de référence enregistrées (46, 47, 48, 49, 50, 51, 52, 53, 54, 55, 56, 57, 58, 59, 60),
- les valeurs de référence (46, 47, 48, 49, 50, 51, 52, 53, 54, 55, 56, 57, 58, 59, 60) étant soumises à une réduction dimensionnelle pour obtenir un nombre de dimensions identique à celui de la valeur de contrôle à dimensions réduites au moyen dudit au moins un traitement statistique,
- pour la réduction dimensionnelle de la valeur de contrôle (46, 47, 48, 49, 50, 51, 52, 53, 54, 55, 56, 57, 58, 59, 60), le même traitement statistique que pour la réduction dimensionnelle de la valeur de contrôle étant utilisé,
- attribution de la valeur de contrôle à dimensions réduites à au moins un groupe de valeurs de référence (46, 47, 48, 49, 50, 51, 52, 53, 54, 55, 56, 57, 58, 59, 60, 104) semblables les unes aux autres, qui correspond à un ou plusieurs défauts ou causes de défauts du produit, et
- identification automatisée du défaut du produit (105) et/ou de la cause du défaut du produit (106) sur la base de l'attribution.

2. Procédé selon la revendication 1,
**caractérisé en ce que** la pluralité de valeurs de référence (46, 47, 48, 49, 50, 51, 52, 53, 54, 55, 56, 57, 58, 59, 60) est classée en fonction des défauts et/ou des causes des défauts du produit lors d'un apprentissage.

3. Procédé selon au moins l'une des revendications 1 et 2,
**caractérisé en ce que** l'attribution est effectuée selon une matrice de distance (104).

4. Procédé selon au moins l'une des revendications 1 à 3,
**caractérisé en ce que** la valeur de contrôle à dimensions réduites est présente au moins 100 dimensions.

5. Procédé selon au moins l'une des revendications 1 à 4,
**caractérisé en ce qu'**une associabilité de la pluralité d'éléments du produit (4, 5, 6, 7, 8, 9, 10, 11, 12, 13, 14, 15, 16, 17, 18) au produit (1, 2, 3, 40, 41, 42, 43, 44, 45) et/ou une traçabilité du produit (1, 2, 3, 40, 41, 42, 43, 44, 45) au cours de toutes les étapes de fabrication est assurée.

6. Procédé selon au moins l'une des revendications 1 à 5,
**caractérisé en ce qu'**une commande d'un processus de production du produit (1, 2, 3, 40, 41, 42, 43, 44, 45) est effectuée (107) en tenant compte des défauts identifiés du produit et des causes identifiées des défauts du produit.

7. Procédé selon au moins l'une des revendications 1 à 6,
**caractérisé en ce que** des informations acoustiques, des informations mécaniques et/ou des informations électriques sont détectées en tant qu'informations de contrôle.

8. Procédé selon au moins l'une des revendications 1 à 7,
**caractérisé en ce qu'**une mesure de réparation ainsi qu'une probabilité de réussite et/ou un coût et/ou un temps demandé par la mesure de réparation du produit sont déterminés (101) sur la base d'un défaut identifié du produit.

9. Procédé selon au moins l'une des revendications 1 à 8,
**caractérisé en ce que** le procédé est adapté de manière automatisée à une pluralité de produits (1, 2, 3, 40, 41, 42, 43, 44, 45).

10. Procédé selon au moins l'une des revendications 1 à 9,
**caractérisé en ce qu'**une notification concernant les défauts du produit et/ou les causes des défauts du produit et/ou la probabilité de réussite et/ou le coût et/ou le temps demandé par la réparation du produit est émise (108) de manière automatisée.

11. Procédé selon au moins l'une des revendications 1 à 10,
**caractérisé en ce que** le procédé est exécuté par une intelligence artificielle à base de connaissances, l'intelligence artificielle se réentraînant elle-même.

12. Procédé selon au moins l'une des revendications 1 à 11,
**caractérisé en ce que** le procédé est exécuté après qu'une finalisation du produit (1, 2, 3, 40, 41, 42, 43, 44, 45) a été effectuée.

13. Dispositif d'identification automatisée d'un défaut d'un produit (1, 2, 3, 40, 41, 42, 43, 44, 45) et/ou d'identification automatisée d'une cause du défaut du produit,
comprenant des moyens permettant
- la production du produit (1, 2, 3, 40, 41, 42, 43, 44, 45) à partir d'une pluralité d'éléments du produit (4, 5, 6, 7, 8, 9, 10, 11, 12, 13, 14, 15, 16, 17, 18) par une pluralité d'étapes de fabrication, et
- la détection d'un nombre n d'informations de contrôle qui décrivent une propriété spécifique du produit, par au moins un contrôle de produit, les n informations de contrôle constituant une valeur de contrôle à n dimensions,
le dispositif comprenant également les moyens suivants pour
- l'exécution d'une réduction dimensionnelle de la valeur de contrôle à n dimensions au moyen d'au moins un traitement statistique pour obtenir une valeur de contrôle à dimensions réduites,
- la comparaison entre la valeur de contrôle à dimensions réduites et une pluralité de valeurs de référence enregistrées (46, 47, 48, 49, 50, 51, 52, 53, 54, 55, 56, 57, 58, 59, 60),
- les valeurs de référence (46, 47, 48, 49, 50, 51, 52, 53, 54, 55, 56, 57, 58, 59, 60) étant soumises à une réduction dimensionnelle pour obtenir un nombre de dimensions identique à celui de la valeur de contrôle à dimensions réduites au moyen dudit au moins un traitement statistique,
- pour la réduction dimensionnelle de la valeur de contrôle (46, 47, 48, 49, 50, 51, 52, 53, 54, 55, 56, 57, 58, 59, 60), le même traitement statistique que pour la réduction dimensionnelle de la valeur de contrôle étant utilisé,
- l'attribution de la valeur de contrôle à dimensions réduites à au moins un groupe de valeurs de référence (46, 47, 48, 49, 50, 51, 52, 53, 54, 55, 56, 57, 58, 59, 60) semblables les unes aux autres, qui correspond à un ou plusieurs défauts ou causes de défauts du produit, et
- l'identification automatisée du défaut du produit et/ou de la cause du défaut du produit sur la base de l'attribution.

14. Dispositif selon la revendication 13,
**caractérisé en ce que** le dispositif est conçu pour mettre en œuvre un procédé 3 selon au moins l'une des revendications 1 à 12.
